# EUROPEAN PATENT SPECIFICATION

(11) **EP 1 652 418 B1**
(45) Date of publication and mention of the grant of the patent: **28.10.2009**
(21) Application number: 05425646.6
(22) Date of filing: 15.09.2005
(51) Int. Cl.: A01C 11/02

(54) **A transplanting machine**
Verpflanzungsmaschine
Machine de repiquage

(30) Priority: 02.11.2004 IT RN20040056
(43) Date of publication of application: 03.05.2006
(73) Proprietor: Urbinati S.r.l., 47030 San Mauro Pascoli (FC) (IT)
(72) Inventor: Urbinati, Nino, 47900 Rimini (IT)
(74) Representative: Ghioni, Carlo Raoul Maria

(56) References cited:
- WO-A-93/19581
- US-A- 5 860 372
- US-B1- 6 513 554

## Description

This invention relates to a machine for transplanting plants.

The invention applies to the industrial plant nursery sector and is designed in particular for transplanting plants automatically.

As is known, plants can be automatically transplanted by machines of the type comprising a plurality of grippers or "fingers" capable of penetrating respective soil plugs in which seedlings are growing. In particular, each finger moves according to a system of Cartesian axes between a first position in which it grips a respective seedling from a pickup station and a second position in which it places the seedling in a pot large enough to accommodate it. The seedlings at the pickup station are usually arranged in parallel rows on a suitable supporting surface.

Normally, the fingers are driven, independently of each other, along a single Cartesian axis substantially parallel to the row of seedlings to be transplanted and can also be driven as a block in directions parallel to the other Cartesian axes.

For this purpose, each finger is slidably engaged on a common elongated guide and is equipped with a respective electric motor. The output shaft of the motor has a transmission element that meshes with a respective rack extending in a direction parallel to the aforementioned common guide. When one of the electric motors is activated, the interaction between the respective transmission element and the rack causes the corresponding motor/finger assembly to move along the aforementioned guide.

Normally, each motor is driven according to the relative position between the respective finger and the seedling to be picked up and is controlled by one or more signals and/or instructions sent by suitable drive means mounted on the transplanting machine. Both the control signals for driving the fingers and the motor power supply are carried to the motors by cumbersome trunk cables which must be long enough to cover the maximum distances between the movable and fixed parts of the machine. Consequently, large quantities of cables are required and these tend to hinder the movements of machine parts. Further, the cables require regular attention and maintenance to counteract wear, failure and damage.

In some cases, the signals for the communication of information between the control means and the motor and the electrical power needed to drive the motors are transmitted through a single cable. In other cases, data communication signals and power supply travel separately through dedicated lines.

The Applicant has found that although current transplanting machines are satisfactory in terms of transplanting efficiency, they have several inherent disadvantages due mainly to the structural complexity of the machines and the encumbrance created by the mobile cables.

To this must be added that current machines require frequent maintenance because the cables are easily damaged. Maintenance costs are inevitably reflected on the overall costs of automatic transplanting.

Document WO 93/19581 discloses a computer controlled seedling transfer apparatus which includes a pair of conveyors for supporting a seed flat and a pot flat. Associated indexing mechanisms translate the flats along the conveyor to align flat recesses with a transfer station between the flats. A seedling transfer mechanism above the conveyors moves transversely between the flats, and includes extendable gripping fingers for gripping, transferring and transplanting a seedling. A computer controls the movement of the indexing mechanisms and seedling transfer mechanism to optimize the seedling transfer operation based on the condition of the flat recesses sensed by a camera.

The main aim of this invention is to overcome the problems inherent in prior art by providing a transplanting machine in which the communication of information between the control means and the drive means and the transmission of electricity for the drive means are accomplished without mobile cables or like connection hardware.

These aims and others, which shall become more readily apparent in the course of the description that follows, are achieved by a transplanting machine having the characteristics of claim 1.

Other technical characteristics and advantages will become more apparent from the detailed description, set out below, of a preferred non-restricting embodiment of a transplanting machine according to the present invention.

The description is set out below with reference to the accompanying drawings which are provided solely for purposes of illustration without restricting the scope of the invention and in which:
Figure 1 is a schematic elevation view of a transplanting machine according to the present invention;
Figure 2 is a schematic side view of a detail of the transplanting machine of Figure 1 made in accordance with a first embodiment of the present invention;
Figure 3 is a schematic side view of a detail of the transplanting machine of Figure 1 made in accordance with a second embodiment of the present invention;
Figure 4 is another schematic side view of a part of the transplanting machine according to the present invention;

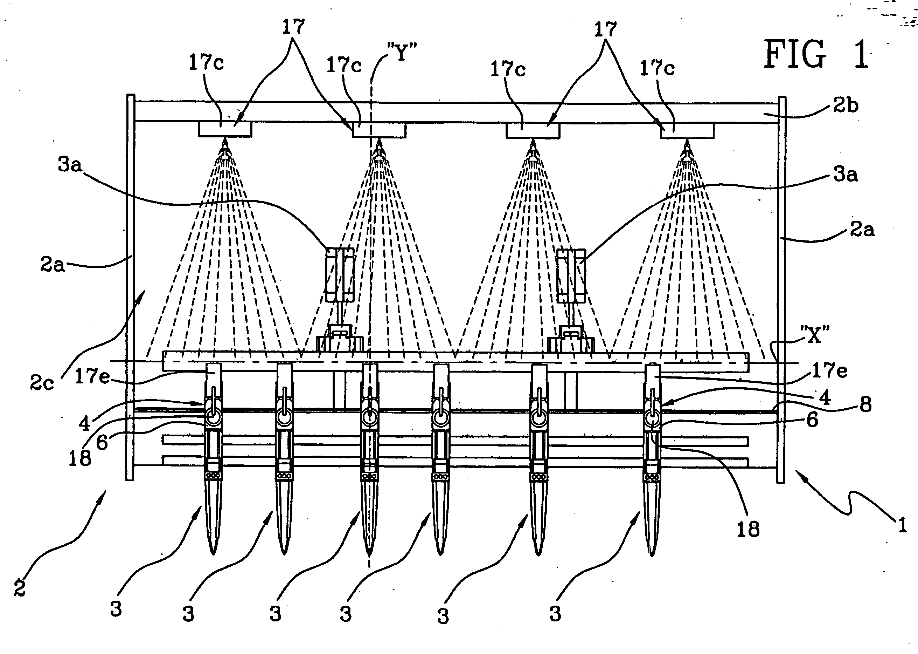

With reference to Figure 1, the numeral 1 denotes in its entirety a transplanting machine made in accordance with this invention.

As shown in Figure 1, the transplanting machine 1 comprises a load-bearing structure 2 attached at the bottom to a base (not illustrated) that supports a series of fixed and mobile components by which one or more plants (not illustrated) are transplanted into pots or like containers.

Looking in more detail, the load-bearing structure 2 comprises at least one pair of uprights 2a connected to each other at the top by a covering portion 2b. The uprights 2a and the covering portion 2b define, at least partly, a working space 2c inside which the aforementioned fixed and movable components of the transplanting machine 1 are housed. The uprights 2a and the covering portion 2b also form a protective structure (not described or illustrated in more detail since it is of well-known type) which isolates the working space 2c from the surrounding environment.

Within the working space 2c, the transplanting machine 1 comprises at least one finger 3 for automatically transplanting plants, and mobile at least between a first position, in which it intercepts and engages a respective plant positioned at a pickup station (not illustrated), and a second position in which it releases the plant and places it in a pot or like container.

In the embodiment illustrated in Figure 1, the transplanting machine 1 preferably comprises a plurality of fingers 3 aligned transversally in a predetermined direction so that a large number of plants can be automatically transplanted simultaneously. The plants are transferred to the pickup station beforehand by conventional loading systems, consisting of conveyor belts, for example, which align them in rows in substantially straight, parallel directions.

Within the working space 2c, each finger 3 is preferably mobile according to a system of Cartesian axes, that is to say, along a first and a second, substantially horizontal axis "X" and "Z" and along a third, substantially vertical axis "Y". More specifically, each finger 3 is preferably able to move independently of the other fingers 3 along the axis "X" which extends in a direction substantially parallel to the row of plants to be transplanted. Thus, the fingers 3 can be positioned vertically over the respective plants at the pickup station. Along the other two axes "Y" and "Z", on the other hand, the fingers 3 can move only as a block, and not independently as they do along the axis "X".

As shown in the accompanying drawings, the fingers 3 can also be moved vertically by appropriate fluid-driven actuators 3a operatively connected to the fingers 3 in a conventional manner and distributed along the direction in which the latter are aligned. Thus, the fingers can move up and down independently of the Cartesian drive system so t hat they c an adapt to the size of the plants to be gripped, of the soil plugs to be penetrated and of the pots to which the plants have to be transferred.

At least between the first and second positions along the axes "X", "Y" and "Z", on the other hand, the fingers 3 are driven by appropriate drive means 4 controlled by at least one signal issued by control means 5 described below.

More particularly, the drive means 4 comprise, for each finger 3, at least one electric motor 6 activated by the above mentioned signal from the control means 5. Each motor 6 is equipped with a respective output shaft 7 mounting a rotatable transmission element 7a that meshes with a fixed rack 8 or similar mechanical part extending between the uprights 2a of the load-bearing structure 2 in a direction substantially parallel to the first axis "X". When the electric motor 6 of a finger 3 is activated by a signal from the control means 5, the rotatable transmission element 7a rotates as one with the respective output shaft 7 about an axis of rotation "W", thereby interacting with the rack 8 and causing the finger 3 to advance in the direction parallel to the first axis "X".

The drive means 4 are also operatively associated with guide means 9 which physically support each finger 3 as it moves along the axis "X".

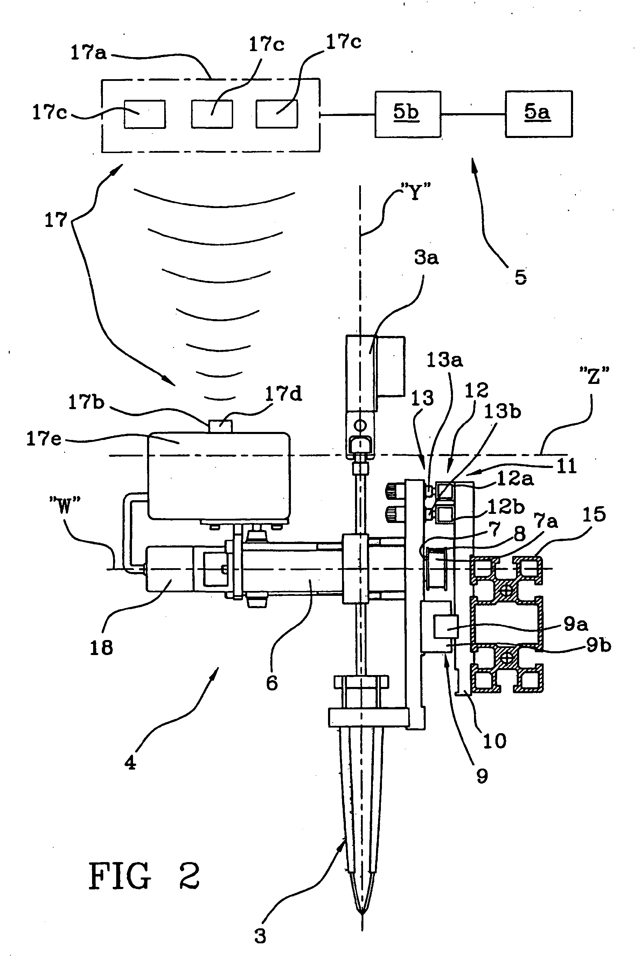

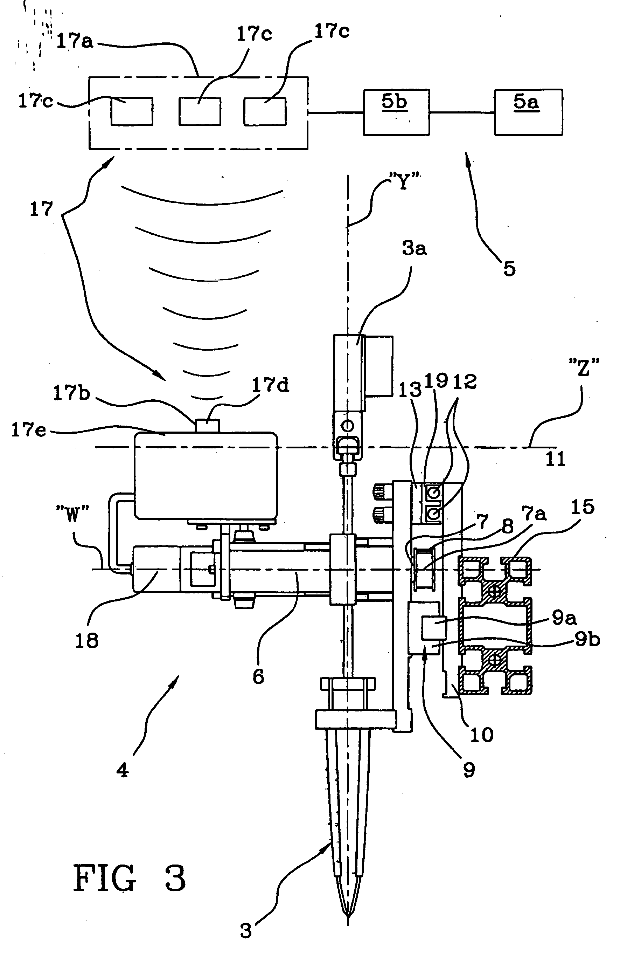

As illustrated in the accompanying drawings, in particular Figures 2 and 3, the guide means 9 comprise at least one rail 9a extending in a direction substantially parallel to the first axis "X" and engaged with a support 10 located in the working space 2c. The guide means 9 further comprise, for each finger 3, at least one slider 9b that is slidably engaged with the rail 9a in a customary manner.

The drive means 4 are also operatively connected to power supply means 11 providing the electrical energy needed to drive the fingers 3 along the first axis "X". Advantageously, the power supply means 11 are not connected to the drive means 4 by intermediate power cables connecting the fixed parts of the machine to the mobile parts.

According to a first preferred embodiment of the invention illustrated in Figure 2, the power supply means 11 preferably comprise a first conductor element 12 extending in a preferential direction substantially parallel to the first axis "X" and connected to an electrical power source (not illustrated). The power supply means 11 also comprise, for each finger 3, a second conductor element 13 operatively connected to the first conductor element 12 and to the respective electric motor 6 of the drive means 4. The second conductor element 13 engages the first conductor element 12 in such a way as to be movable along the latter and thereby providing a continuous supply of electrical power for the respective electric motor 6 during the movements of the finger 3 along the first axis "X".

Preferably, the first conductor element 12 comprises a pair of conductive tracks 12a, 12b, each connected to a respective positive or negative power pole, and the second conductor element 13 comprises a pair of brushes 13a, 13b in contact with the conductive tracks 12a, 12b. The brushes 13a, 13b can slide on the conductive tracks 12a, 12b enabling each finger 3 to move while at the same time providing the power supply necessary for the operation of the electric motor 6.

According to a second preferred embodiment of the invention illustrated in Figure 3, the power supply means 11 transfer electrical power to the respective electric motors 6 of the fingers 3 by magnetic induction. More specifically, the power supply means 11 transfer electrical power from the power source to each electric motor 6 without sliding contacts.

In this case, the power supply means 11 comprise: a first conductor element 12 extending in a direction parallel to the first axis "X" and connected to an electrical power source; a second conductor element 13 operatively connected to the first conductor element 12 and to the respective electric motor 6; and a magnetic element 19 operatively interposed between the first and second conductor elements 12, 13. The first conductor element 12 generates a magnetic field which induces in the second conductor element 13 an electric current sufficient to drive the respective motor 6. Preferably, the magnetic element 19 is physically connected to the second conductor element 13 to form a single block near the first conductor element 12.

The magnetic induction p ower means 11 enable the electric current to b e transferred from the power source to the motors 6 without direct contact between the moving parts. When the respective finger 3 is moved along the first axis "X" it is therefore not subject to any friction although it receives the power necessary for movement.

It should also be considered that the solutions described above, illustrated in Figures 2 and 3, relating to the power supply means 11 might be substituted by suitable batteries, preferably rechargeable, fitted directly to the electric motors 6.

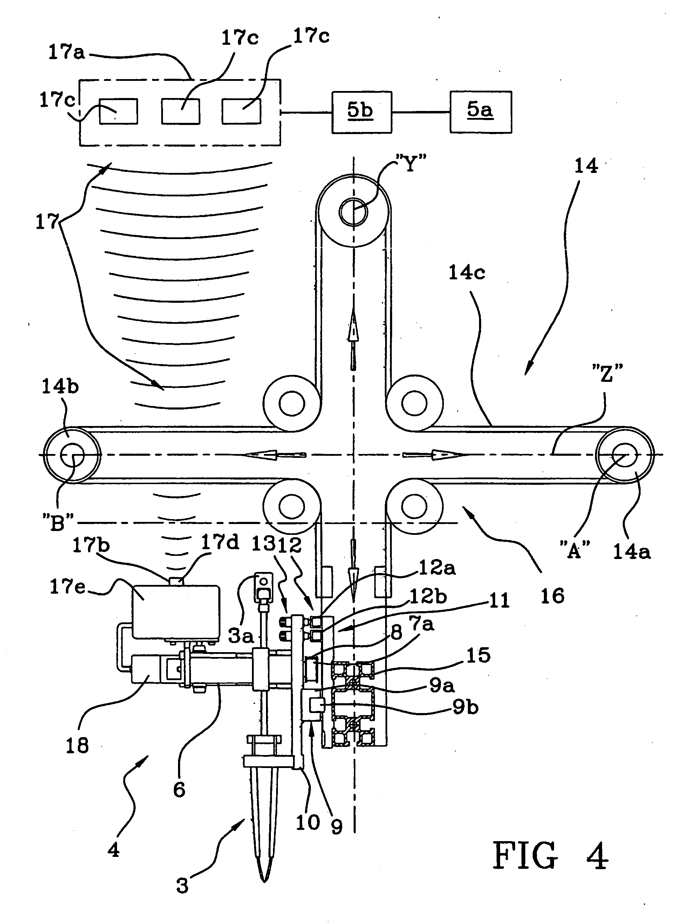

With reference to Figure 4, the movement of the fingers 3 along the second and third axes "Z" and "Y" is accomplished by a drive unit 14 forming part of the drive means 4 and located in the working space 2c at the uprights 2a of the load-bearing structure 2. More specifically, the drive unit 14 is operatively connected to the fingers 3 by respective intermediate supporting structures 15 in such a way as to move the fingers 3 in directions parallel to the second and third axes "Z" and "Y". Advantageously, the drive unit 14 comprises, for each upright 2a, at least one first drive roller 14a that is rotationally driven about a respective first axis of rotation "A" and at least one second drive roller 14b that is rotationally driven about a respective second axis of rotation "B". The drive unit 14 further comprises at least one, preferably toothed, drive belt 14c (shown with a break in it, for clarity, in Figure 4) trained at least partly around the first and second drive rollers 14a, 14b.

Transmission means 16 are operatively interposed between the drive rollers 14a, 14b and the supporting structure 15.

When the drive rollers 14a, 14b are rotated in the same direction of rotation, the fingers 3 are moved as a block in a direction parallel to the second axis "Z". When the drive rollers 14a, 14b are rotated in opposite directions of rotation, the fingers 3 are moved as a block in a direction parallel to the third axis "Y". Obviously, in order to enable the operation of the drive system, some parts of the drive unit 14 must be movable relative to others.

Still with reference to the accompanying drawings, the aforementioned control means 5 are operatively in communication with the drive means 4 so as to be able to issue a command to the latter through the above mentioned signal. Preferably the control means 5 comprise, as schematically illustrated in Figures 2, 3 and 4, at least one programmable electronic unit 5a, such as for example a PLC or a PC, electrically connected to at least one control card 5b.

Advantageously, the invention also contemplates the provision of wireless transmission means 17 operatively connected between the control means 5 and the drive means 4 to transmit to the drive means the control signal generated by the programmable electronic unit 5a.

As illustrated schematically in the accompanying drawings, the wireless transmission means 17 comprise a first transceiver block 17a associated with the control means 5 and a second transceiver block 17b associated with the drive means 4 to receive and transmit data. The first transceiver block 17a preferably comprises a plurality of transceivers 17c electrically connected to the control card 5b of the control means 5, whilst the second transceiver block 17b comprises a set of transceivers 17d, associated with and electrically connected to the respective electric motor 6 through at least one interposed card 17e for controlling the axes.

Preferably, the first and second transceiver blocks 17a, 17b communicate with each other through electromagnetic waves advantageously within the infrared or radio frequency spectrum. For transmission of electromagnetic waves in the radio frequency spectrum, short-range communication at least according to a predetermined protocol such as that used for exchanging information according to Bluetooth© technology is also imaginable.

Advantageously, the transmission of commands from the programmable electronic unit 5a to the drive means 4 through the transceiver blocks 17a, 17b is of the master-slave type, where one entity controls the machine by issuing a series of commands to the machine components and the other entities execute the commands issued to them.

The axis control card 17e, however, might also send to the control means 5 information relating to the actual position of each finger, located by detection means 18 such as an incremental encoder or like device. In this particular case, the detection means 18 locate the position of each finger 3 relative to a fixed reference position and communicate the position to the respective axis control cards 17e so that each finger 3 is moved according to the commands sent by the control means 5 and according to the positions of the fingers 3 detected.

The present invention overcomes the problems inherent in prior art and achieves the aims set out above. First of all, the transplanting machine according to the invention has a simpler structure than similar machines known in prior art on account of the total absence not only of mobile cables for transmitting information between the control means 5 and the drive means 4, but also of mobile power cables.

It should also be underlined that the elimination of the cables makes it possible to optimise the working space 2c, even in terms of external appearance.

Another advantage is that the invention enables the transplanting fingers to be removed and fitted quickly and easily and, if necessary, substituted with different types of fingers, since they are not connected to mobile cables. Similarly, the number of fingers can be easily increased or reduced.

Moreover, in the embodiment where electrical power is supplied by electromagnetic induction, the friction that normally occurs at the sliding contacts during movement of the fingers 3 is significantly reduced.

The invention also significantly reduces the maintenance required to substitute the moving parts of the machine which are in contact with each other and therefore subject to wear.

## Claims

1. A transplanting machine comprising:
at least one finger (3) for automatically transplanting plants, said finger (3) being mobile at least between a first position, in which it intercepts and
engages a respective plant, and a second position in which it releases the plant;
drive means (4) operatively connected to the finger (3) in order to move the latter between the first and second positions upon receiving at least one control signal;
control means (5) operatively in communication with the drive means (4) so as to issue a command to the latter through said at least one control signal;
the transplanting machine being **characterised in that** it further comprises:
i) wireless transmission means (17) operatively interposed between the control means (5) and the drive means (4) so as to transmit to the latter said at least one signal;
ii) power supply means which in turn comprises:
- a first conductor element (12) extending in a preferential direction and connected to an electrical power source; and
- a second conductor element (13) operatively connected to the first conductor element (12) and to an electric motor (6) forming part of the drive means (4), the second conductor element (13) being mobile along the first conductor element (12) in such a way as to provide a continuous supply of electric power for the motor (6) during movements of the finger (3) along at least one direction substantially parallel to the first conductor element (12) itself.

2. The transplanting machine according to claim 1, **characterised in that** the wireless transmission means (17) comprise a first transceiver block (17a) associated with the control means (5) and a second transceiver block (17b) associated with the drive means (4); the first and second transceiver blocks (17a, 17b) enabling the controls means (5) and the drive means (4) to communicate with each other.

3. The transplanting machine according to claim 2, **characterised in that** the first and second transceiver blocks (17a, 17b) communicate with each other by means of electromagnetic waves.

4. The transplanting machine according to claim 3, **characterised in that** the first and second transceiver blocks (17a, 17b) communicate with each other by means of electromagnetic waves within the infrared spectrum.

5. The transplanting machine according to claim 3, **characterised in that** the first and second transceiver blocks (117a, 17b) communicate with each other by means of electromagnetic waves within the radio frequency spectrum.

6. The transplanting machine according to claim 2, **characterised in that** the first and second transceiver blocks (17a, 17b) communicate with each other through at least one predetermined communication protocol.

7. The transplanting machine according to any of the foregoing claims, **characterised in that** the second conductor element (13) is operatively connected to the first conductor element (12) without intermediate power cables.

8. The transplanting machine according to any of the foregoing claims, **characterised in that** the first conductor element (12) comprises a pair of conductive tracks (12a, 12b) and **in that** the second conductor element (13) comprises at least two brushes (13a, 13b) in contact with the respective conductive tracks (12a, 12b) of the first conductor element (12).

9. The transplanting machine according to one or more of the foregoing claims, **characterised in that** the power supply means (11) transfer electrical current by magnetic induction from the power source to a respective electric motor (6) forming part of the drive means (4).

10. The transplanting machine according to claim 9, **characterised in that** the power supply means (11) transfer electrical current from the power source to the respective electric motor (6) without sliding contacts.

11. The transplanting machine according to claim 9 or 10, **characterised in that** the power supply means (11) comprise a magnetic element (19) operatively interposed between the first and second conductor elements (12, 13) and preferably associated with the second conductor element (13) in such a way as to induce in the second conductor element (13) an electric current for driving the respective motor (6) during the movements of the finger (3) along at least one direction substantially parallel to the direction in which the first conductor element (12) itself extends.

12. The transplanting machine according to any of the foregoing claims, **characterised in that** it further comprises detection means (18) operatively associated with the finger (3) to locate the position of the latter relative to at least one fixed reference position; the detection means (18) communicating the position of the finger (3) to control means that are operatively associated with the drive means (4), thus moving the finger according to the at least one control signal and the position of the finger (3) detected by the detection means (18).

13. The transplanting machine according to claim 12, **characterised in that** the detection means (18) comprise at least one encoder.

14. The transplanting machine according to claim 1 or 2 or 3 or 4 or 5 or 6 or 11, **characterised in that** the drive means (4) further comprise at least one drive unit (14) operatively connected to the finger (3) so as to drive the latter along a first and/or a second direction substantially perpendicular to the direction in which the first conductor element (12) extends and substantially perpendicular to each other.

15. The transplanting machine according to claim 14, **characterised in that** the drive unit (14) comprises:
a first drive roller (14a) that is rotationally driven about a respective axis of rotation ("A");
a second drive roller (14b) that is rotationally driven about a respective second axis of rotation ("B");
a drive belt (14c) trained at least partly around the first and second drive rollers (14a, 14b);
transmission means (16) operatively interposed between the drive rollers (14a, 14b) and the supporting structure (15);
the finger (3) being moved in the first direction when the first and second drive rollers (14a, 14b) are rotated in the same direction and being moved in the second direction when the first and second drive rollers (14a, 14b) are rotated in opposite directions.

## Patentansprüche

1. Verpflanzungsmaschine, enthaltend:
- wenigstens eine Zange (3) zum automatischen Pikieren von Pflanzen, wobei die genannte Zange (3) beweglich ist wenigstens zwischen einer ersten Position, in welcher sie eine jeweilige Pflanze ertastet und greift, und einer zweiten Position, in welcher sie die Pflanze freigibt;
- Antriebsmittel (4), betrieblich angeschlossen an die Zange (3), um letztere nach dem Empfang von wenigstens einem Steuersignal zwischen den ersten und zweiten Positionen zu bewegen;
- Steuermittel (5), betrieblich in Verbindung mit den Antriebsmitteln (4) stehend, so dass durch das genannte wenigstens eine Steuersignal ein Befehl an letztere ausgegeben wird;
wobei die Verpflanzungsmaschine **dadurch gekennzeichnet ist, dass** sie ausserdem enthält:
i) drahtlose Übertragungsmittel (17), betrieblich eingesetzt zwischen den Steuermitteln (5) und den Antriebsmitteln (4), so dass an letztere das genannte wenigstens eine Signal übertragen wird;
ii) Stromzufuhrmittel, welche wiederum enthalten::
- ein erstes Leiterelement (12), das sich in einer vorgezogenen Richtung erstreckt und an eine elektrische Stromquelle angeschlossen ist; und
- ein zweites Leiterelement (13), betrieblich angeschlossen an das erste Leiterelement (12) und an einen Elektromotor (6), der Teil der Antriebsmittel (4) bildet, wobei das zweite Leiterelement (13) beweglich ist entlang dem ersten Leiterelement (12) auf solche Weise, dass eine kontinuierliche Zufuhr von Strom an den Motor (6) während der Bewegung der Zangen (3) entlang wenigstens einer Richtung vorgesehen ist, die im wesentlichen parallel zu dem ersten Leiterelement (12) selbst verläuft.

2. Verpflanzungsmaschine nach Patentanspruch 1, **dadurch gekennzeichnet, dass** die drahtlosen Übertragungsmittel (17) einen ersten Sender-Empfänger-Block (17a) enthalten, zugeordnet den Steuermitteln (5), und einen zweiten Sender-Empfänger-Block (17b), zugeordnet den Antriebsmitteln (4); wobei die ersten und zweiten Sender-Empfänger-Blöcke (17a, 17b) die Steuermittel (5) und die Antriebsmittel (4) befähigen, miteinander zu kommunizieren.

3. Verpflanzungsmaschine nach Patentanspruch 2, **dadurch gekennzeichnet, dass** die ersten und zweiten Sender-Empfänger-Blöcke (17a, 17b) mit Hilfe von elektromagnetischen Wellen miteinander kommunizieren

4. Verpflanzungsmaschine nach Patentanspruch 3, **dadurch gekennzeichnet, dass** die ersten und zweiten Sender-Empfänger-Blöcke (17a, 17b) mit Hilfe von elektromagnetischen Wellen innerhalb des Infrarotspektrums miteinander kommunizieren.

5. Verpflanzungsmaschine nach Patentanspruch 3, **dadurch gekennzeichnet, dass** die ersten und zweiten Sender-Empfänger-Blöcke (17a, 17b) mit Hilfe von elektromagnetischen Wellen innerhalb des Radiofrequenzspektrums miteinander kommunizieren.

6. Verpflanzungsmaschine nach Patentanspruch 2, **dadurch gekennzeichnet, dass** die ersten und zweiten Sender-Empfänger-Blöcke (17a, 17b) durch wenigstens ein vorgegebenes Kommunikationsprotokoll miteinander kommunizieren.

7. Verpflanzungsmaschine nach einem jeden der vorstehenden Patentansprüche, **dadurch gekennzeichnet, dass** das zweite Leiterelement (13) betrieblich an das erste Leiterelement (12) ohne zwischenliegende Stromkabel angeschlossen ist.

8. Verpflanzungsmaschine nach einem jeden der vorstehenden Patentansprüche, **dadurch gekennzeichnet, dass** das erste Leiterelement (12) ein Paar von leitenden Bahnen (12a, 12b) enthält, und dass das zweite Leiterelement (13) wenigstens zwei Bürsten (13a, 13b) im Kontakt mit den jeweiligen leitenden Bahnen (12a, 12b) des ersten Leiterelementes (12) enthält.

9. Verpflanzungsmaschine nach einem oder mehreren der vorstehenden Patentansprüche, **dadurch gekennzeichnet, dass** die Stromzufuhrmittel (11) elektrischen Strom durch magnetische Induktion von der Stromquelle an einen jeweiligen Elektromotor (6) übertragen, welcher Teil der Antriebsmittel (4) bildet.

10. Verpflanzungsmaschine nach Patentanspruch 9, **dadurch gekennzeichnet, dass** die Stromzufuhrmittel (11) elektrischen Strom von der Stromquelle ohne Schleifkontakte an den jeweiligen Elektromotor (6) übertragen.

11. Verpflanzungsmaschine nach Patentanspruch 9 oder 10, **dadurch gekennzeichnet, dass** die Stromzufuhrmittel (11) ein Magnetelement (19) enthalten, das betrieblich zwischen den ersten und zweiten Leiterelementen (12, 13) eingesetzt und vorzugsweise dem zweiten Leiterelement (13) zugeordnet ist, und zwar auf solche Weise, dass in das zweite Leiterelement (13) ein elektrischer Strom für den Antrieb des jeweiligen Motors (6) während der Bewegung der Zange (3) entlang wenigstens einer Richtung induziert wird, die im wesentlichen parallel zu der Richtung verläuft, in welcher sich das erste Leiterelement (12) selbst erstreckt.

12. Verpflanzungsmaschine nach einem jeden der vorstehenden Patentansprüche, **dadurch gekennzeichnet, dass** sie ausserdem Abtastmittel (18) enthält, betrieblich der Zange (3) zugeordnet, um die Position letzterer entsprechend wenigstens zu einer feststehenden Bezugsposition auszurichten; wobei die Abtastmittel (18) die Position der Zange (3) den Steuermitteln mitteilen, die betrieblich den Antriebsmitteln (4) zugeordnet sind, und somit die Zange (3) in Übereinstimmung mit dem wenigstens einen Steuersignal und der Position der Zange (3) bewegen, erfasst durch die Abtastmittel (18).

13. Verpflanzungsmaschine nach Patentanspruch 12, **dadurch gekennzeichnet, dass** die Abtastmittel (18) wenigstens einen Encoder enthalten.

14. Verpflanzungsmaschine nach Patentanspruch 1 oder 2 oder 3 oder 4 oder 5 oder 6 oder 11, **dadurch gekennzeichnet, dass** die Antriebsmittel (4) ausserdem wenigstens eine Antriebseinheit (14) enthalten, betrieblich an die Zange (3) angeschlossen, um letztere in einer ersten und/oder einer zweiten Richtung im wesentlichen lotrecht zu der Richtung zu führen, in welcher sich das erste Leiterelement (12) erstreckt und im wesentlichen lotrecht lotrecht zueinander.

15. Verpflanzungsmaschine nach Patentanspruch 14, **dadurch gekennzeichnet, dass** die Antriebseinheit (14) enthält:
- eine erste Antriebsrolle (14a), die in Umdrehung um eine jeweilige Drehachse ("A") angetrieben wird;
- eine zweite Antriebsrolle (14b), die in Umdrehung um eine jeweilige zweite Drehachse ("B") angetrieben wird;
- einen Antriebsriemen (14c), gezogen wenigstens teilweise um die ersten und die zweiten Antriebsrollen (14a, 14b);
- Übertragungsmittel (16), betrieblich eingesetzt zwischen den Antriebsrollen (14a, 14b) und der Trägerstruktur (15); wobei die Zange (3) in der ersten Richtung bewegt wird, wenn die ersten und zweiten Antriebsrollen (14a, 14b) in der gleichen Richtung gedreht werden, und sie in der zweiten Richtung bewegt wird, wenn die ersten und zweiten Antriebsrollen (14a, 14b) in entgegengesetzte Richtungen gedreht werden.

## Revendications

1. Machine de repiquage comprenant:
- au moins une pince (3) pour le repiquage automatique de plantes, ladite pince (3) étant mobile au moins entre une première position, dans laquelle elle intercepte et engage une plante respective, et une seconde position dans laquelle elle relâche la plante;
- des moyens d'actionnement (4) opérativement connectés à la pince (3) de manière à déplacer cette dernière entre les première et seconde positions à réception d'au moins un signal de commande;
- des moyens de commande (5) opérativement en communication avec les moyens d'actionnement (4) de manière à envoyer une commande à ces derniers par l'intermédiaire d'au moins un signal de commande;
la machine de repiquage étant **caractérisée en ce qu'**elle comprend de plus:
i) des moyens de transmission sans fil (17) opérativement interposés entre les moyens de commande (5) et les moyens d'actionnement (4) de manière à transmettre à ces derniers ledit au moins un signal;
ii) des moyens d'alimentation comprenant à leur tour:
- un premier élément conducteur (12) s'étendant dans une direction préférentielle et connecté à une source d'alimentation électrique; et
- un second élément conducteur (13) opérativement connecté au premier élément conducteur (12) et à un moteur électrique (6) faisant partie des moyens d'actionnement (4), le second élément conducteur (13) étant mobile le long du premier élément conducteur (12) de manière à fournir une alimentation continue de puissance électrique pour le moteur (6) pendant les mouvement des pinces (3) le long d'au moins une direction substantiellement parallèle au premier élément conducteur (12) lui-même.

2. Machine de repiquage selon la revendication 1, **caractérisée en ce que** les moyens de transmission sans fil (17) comprennent un premier bloc émetteur-récepteur (17a) associé aux moyens de commande (5) et un second bloc émetteur-récepteur (17b) associé aux moyens d'actionnement (4); le premier et le second blocs émetteurs-récepteurs (17a, 17b) permettant aux moyens de commande (5) et aux moyens d'actionnement (4) de communiquer l'un avec l'autre.

3. Machine de repiquage selon la revendication 2, **caractérisée en ce que** le premier et le second blocs émetteurs-récepteurs (17a, 17b) communiquent entre eux aux moyens d'ondes électromagnétiques.

4. Machine de repiquage selon la revendication 3, **caractérisée en ce que** le premier et le second blocs émetteurs-récepteurs (17a, 17b) communiquent entre eux au moyen d'ondes électromagnétiques à l'intérieur du spectre infrarouge.

5. Machine de repiquage selon la revendication 3, **caractérisée en ce que** le premier et le second blocs émetteurs-récepteurs (17a, 17b) communiquent entre eux au moyen d'ondes électromagnétiques à l'intérieur du spectre de radiofréquence.

6. Machine de repiquage selon la revendication 2, **caractérisée en ce que** le premier et le second blocs émetteurs-récepteurs (17a, 17b) communiquent entre eux par l'intermédiaire d'au moins un protocole de communication prédéterminé.

7. Machine de repiquage selon l'une quelconque des revendications précédentes, **caractérisé en ce que** le second élément conducteur (13) est opérativement connecté au premier élément conducteur (12) sans câbles d'alimentation intermédiaires.

8. Machine de repiquage selon l'une quelconque des revendications précédentes, **caractérisé en ce que** le premier élément conducteur (12) comprend une paire de pistes conductrices (12a, 12b) et **en ce que** le second élément conducteur (13) comprend au moins deux balais (13a, 13b) en contact avec les respectives pistes conductrices (12a, 12b) du premier élément conducteur (12).

9. Machine de repiquage selon l'une quelconque des revendications précédentes, **caractérisé en ce que** les moyens d'alimentation (11) transfèrent du courant électrique par induction magnétique de la source d'alimentation à un respectif moteur électrique (6) faisant partie des moyens d'actionnement (4).

10. Machine de repiquage selon la revendication 9, **caractérisée en ce que** les moyens d'alimentation (11) transfèrent du courant électrique de la source d'alimentation au respectif moteur électrique (6) sans contacts glissants.

11. Machine de repiquage selon la revendication 9 ou 10, **caractérisée en ce que** les moyens d'alimentation (11) comprennent un élément magnétique (19) opérativement interposé entre les premier et second éléments conducteurs (12, 13) et préférablement associé au second élément conducteur (13) de manière à induire dans le second élément conducteur (13) un courant électrique pour actionner le respectif moteur (6) pendant les mouvements de la pince (3) le long d'au moins une direction substantiellement parallèle à la direction dans laquelle le premier élément conducteur (12) lui-même s'étend.

12. Machine de repiquage selon l'une quelconque des revendications précédentes, **caractérisé en ce qu'**elle comprend de plus des moyens de détection (18) opérativement associés à la pince (3) pour localiser la position de cette dernière par rapport à au moins une position fixe de référence; les moyens de détection (18) communiquant la position de la pince (3) aux moyens de commande qui sont opérativement associés aux moyens d'actionnement (4), en déplaçant ainsi la pince selon l'au moins un signal de commande et selon la position de la pince (3) détectée par les moyens de détection (18).

13. Machine de repiquage selon la revendication 12, **caractérisée en ce que** les moyens de détection (18) comprennent au moins un encodeur.

14. Machine de repiquage selon la revendication 1 ou 2 ou 3 ou 4 ou 5 ou 6 ou 11, **caractérisée en ce que** les moyens d'actionnement (4) comprennent de plus au moins une unité d'actionnement (14) opérativement connectée à la pince (3) de manière à actionner cette dernière le long d'une première et/ou second direction substantiellement perpendiculaire à la direction dans laquelle le premier élément conducteur (12) s'étend et substantiellement perpendiculaires entre elles.

15. Machine de repiquage selon la revendication 14, **caractérisée en ce que** l'unité d'actionnement (14) comprend:
- un premier rouleau d'actionnement (14a) entrainé en rotation autour d'un respectif axe de rotation (A);
- un second rouleau d'actionnement (14b) entrainé en rotation autour d'un respectif second axe de rotation (B);
- une courroie de transmission (14c) entrainée au moins partiellement autour du premier et du second rouleaux (14a, 14b);
- des moyens de transmission (16) opérativement interposés entre les rouleaux d'actionnement (14a, 14b) et la structure de support (15);
la pince (3) étant déplacée dans la première direction lorsque les premier et second rouleaux d'actionnement (14a, 14b) sont pivotés dans la même direction et étant déplacée dans la seconde direction lorsque les premier et second rouleaux d'actionnement (14a, 14b) sont pivotés dans des directions opposées.
